(19) Europäisches Patentamt
European Patent Office
Office européen des brevets

(11) Veröffentlichungsnummer: **0 034 832**
**B1**

(12) **EUROPÄISCHE PATENTSCHRIFT**

(45) Veröffentlichungstag der Patentschrift: **21.09.83**

(21) Anmeldenummer: **81101325.9**

(22) Anmeldetag: **24.02.81**

(51) Int. Cl.³: **C 09 B 1/02,** C 09 B 1/20, C 09 B 1/32, C 09 B 1/50, C 09 B 1/54, C 09 B 1/56, C 09 B 43/22, C 09 K 3/34

# (54) Flüssigkristall mit einem eingelagerten pleochroitischen Anthrachinon-Farbstoff und seine Verwendung.

(30) Priorität: **26.02.80 DE 3007198**

(43) Veröffentlichungstag der Anmeldung: **02.09.81 Patentblatt 81/35**

(45) Bekanntmachung des Hinweises auf die Patenterteilung: **21.09.83 Patentblatt 83/38**

(84) Benannte Vertragsstaaten: **CH DE FR GB IT LI NL SE**

(56) Entgegenhaltungen: **EP-A-0 002 104 FR-A-2 387 271 FR-A-2 426 724**

(73) Patentinhaber: **SIEMENS AKTIENGESELLSCHAFT, Berlin und München Wittelsbacherplatz 2, D-8000 München 2 (DE)**

(72) Erfinder: **Möller, Alexander, Dipl.-Chem., Potsdamer Chaussee 50, D-1000 Berlin 38 (DE)**
Erfinder: **Scherowsky, Günther, Dr., Winklerstrasse 18 b, D-1000 Berlin 33 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Flüssigkristall mit einem eingelagerten pleochroitischen Anthrachinonfarbstoff und seine Verwendung

Die Erfindung befasst sich mit einem Flüssigkristall, dem ein Anthrachinon beigegeben ist, sowie mit der Verwendung dieser Mischung.

Bereits seit einiger Zeit arbeitet man intensiv an der Realisierung der sogenannten absorptiven Flüssigkristallanzeige, bei der in der Flüssigkristallschicht ein pleochroitischer Farbstoff eingelagert ist [„Appl. Phys. Lett." *13* (1968) 91]. Ein solches Display zeichnet sich vor allem dadurch aus, dass es über einen grossen Betrachtungswinkelbereich verfügt und ohne Polarisatoren auskommt. Wenn trotz dieser attraktiven Eigenschaften Flüssigkristallanzeigen mit Farbstoffzusatz bis heute noch nicht voll konkurrenzfähig geworden sind, so liegt dies vor allem daran, dass man noch keinen Farbstoff entwickeln konnte, der sich nicht nur in ausreichender Menge löst und über lange Lager- und Betriebszeiten hinweg stabil ist, sondern auch einen akzeptablen Kontrast liefert.

Der Darstellungskontrast hängt vor allem davon ab, inwieweit die Flüssigkristallmoleküle ihren jeweiligen Orientierungszustand auf die eingebeteten Farbstoffmoleküle übertragen können. Kennzeichnend für den Ordnungsgrad des Farbstoffs ist die Grösse $S = 1/2(3\langle\cos^2\theta\rangle - 1)$, die durch Mittelung über die Winkel $\theta$ zwischen den einzelnen Farbstoffmolekülen und dem Direktor der Flüssigkristallmatrix gewonnen wird.

S nimmt im Idealfall, wenn alle Farbstoffmoleküle parallel zur Vorzugsrichtung der Flüssigkristallmoleküle liegen, den Wert 1 an und liegt in der Praxis deutlich darunter. [Die Berechnungsmöglichkeiten für S sowie die Zusammenhänge zwischen dem Ordnungsparameter und dem vom Betrachter wahrgenommenen Kontrast sind in „IEEE Trans.on Electron Devices" *ED-24* (1977) 823 dargestellt.]

Einen hohen Ordnungsgrad haben bestimmte Azofarbstoffe, die beispielsweise in „Electronics Lett." 12 (1976) 514 beschrieben werden. Es hat sich jedoch herausgestellt, dass gerade diejenigen Azoverbindungen, die die höchsten S-Werte (S = 0,79) und die grössten Absorptionskoeffizienten aufweisen, schon nach wenigen 1000 h zerfallen und unter UV-Belastung rasch ausbleichen.

Relativ beständig sind Farbstoffe auf Anthrachinonbasis, die deshalb auch schon frühzeitig auf ihre Eignung als Flüssigkristalladditiv hin untersucht wurden. So werden bereits in der DE-AS Nr. 2445164 1,4-Alkylphenylaminoanthrachinone sowie 1,4- und 1,8-Alkylaminoanthrachinone erwähnt, die jedoch, soweit die Auslegeschrift hierfür Angaben enthält, nur schwache Bildkontraste bewirken. Substituiert man, wie in der DE-OS Nr. 2815335 vorgesehen, den Anthrachinonring an seinen Positionen 1 und 4 bzw. 1 und 8 mit dem Rest $-N = CH-C_6H_4-X$ ($C_6H_4$ ist eine Phenylgruppe und X steht für eine Nitro-, Cyan-, Phenyl-, $C_{1-20}$-Alkyl-, $C_{1-20}$-Alkoxy- oder eine Di-$C_{1-4}$-Alkylamino-Gruppe), so kann man recht hohe Ordnungsgrade erhalten. Die in der DE-OS Nr. 2815335 genannten Spitzenwerte von 0,9 und darüber lassen sich allerdings, soweit die betreffenden Flüssigkristall/Farbstoff-Gemische nachgemessen wurden, nicht reproduzieren. Hinzu kommt, dass diese Verbindungsklasse nur sehr wenige Farben liefert; die Anthrachinone mit den 1-und 4ständigen Resten sind blau, die bei 1 und 8 substituierten Anthrachinone haben einen rötlichen Farbton. Ein grösseres Farbenspektrum steht zur Verfügung, wenn man, wie in der europäischen Offenlegungsschrift Nr. 0002104 vorgeschlagen, den Anthrachinonring an seinen Positionen 1, 4 und 5 folgendermassen substituiert: Bei 1 sitzt eine (substituierte oder modifizierte) Anilinogruppe, auf Position 4 befindet sich entweder Wasserstoff oder eine Hydroxylgruppe, und der 5ständige Rest ist im ersten Fall eine (substituierte oder modifizierte) Anilinogruppe und im zweiten Fall ein Wasserstoff. Diese Farbstoffklasse ist chemisch, vor allem photochemisch, ausserordentlich resistent, lässt sich aber nicht sonderlich gut orientieren; die S-Werte bleiben in aller Regel unter 0,7 und erreichen bestenfalls 0,71.

In der FR-A- Nr. 2426724 wird u.a. auch ein in der 2,6-Stellung

mit 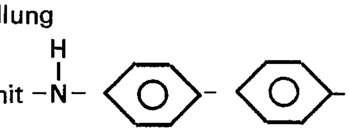

substituiertes Anthrachinon erwähnt. Diese Verbindung bringt es jedoch nur auf einen Ordnungsgrad von 0,68, der im Vergleich zu den S-Werten den anderen, an den Positionen 1,4 oder 1,5 oder 1,8 substituierten Anthrachinone am schlechtesten abschneidet.

Der Erfindung liegt die Aufgabe zugrunde, einen Flüssigkristall mit einem stabilen Anthrachinonfarbstoff zu dotieren, der hinreichend löslich ist und dabei gut ausgerichtet werden kann. Zur Lösung dieser Aufgabe wird erfindungsgemäss vorgeschlagen, in den Flüssigkristall 1,5-Diamino-4,8-dihydroxy-3,7-di-(4-methoxyphenyl)anthrachinon einzulagern.

Die Moleküle der erfindungsgemässen Verbindung, bei der die Stellen 3 und 7 des Anthrachinonringes substituiert sind, haben eine sehr gestreckte, schlanke Form und lassen sich daher besonders einfach in die Wirtmatrix einpassen. Messungen haben ergeben, dass man mühelos S-Werte über 0,75 erzielen kann und dass diese Werte von der verwendeten Flüssigkristallmischung nur wenig abhängen. Die vorgeschlagene Substanz lässt sich ohne sonderlichen Aufwand und mit recht hohen Ausbeuten herstellen; ihre Absorptionsfähigkeit vermindert sich auch nach längerer UV-Bestrahlung nur geringfügig.

Die Erfindung soll nun unter Bezugnahme auf die beigefügten Figuren näher erläutert werden. Es zeigen:

Fig. 1 eine Flüssigkristallanzeige in einem Seitenschnitt,

Fig. 2 von dem erfindungsgemässen Farbstoff die Absorptionsspektren für Licht, das parallel

bzw. senkrecht zur Längsachse der parallel ausgerichteten Farbstoffmoleküle polarisiert ist.

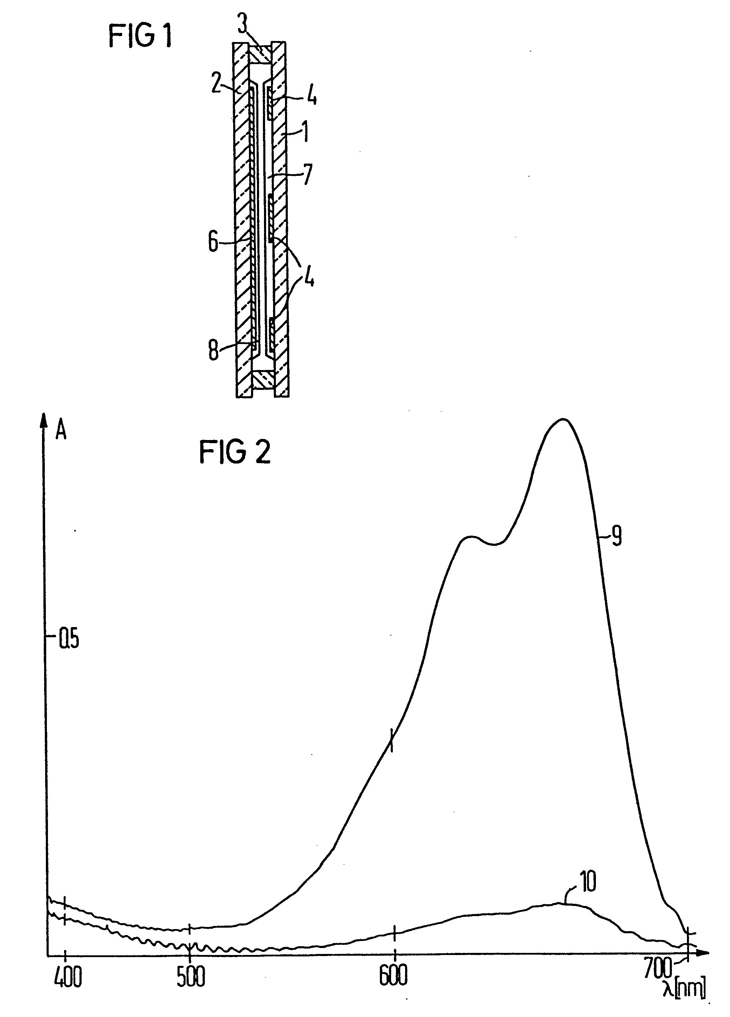

Das in der Fig. 1 dargestellte Flüssigkristalldisplay enthält zwei zueinander parallele Trägerplatten 1, 2, die über einen Rahmen 3 miteinander verbunden sind und auf ihren Innenseiten jeweils leitfähige Beläge (getrennt ansteuerbare Segmentelektroden 4, durchgehende Rückelektrode 6) sowie plattenparallel orientierende Schichten 7, 8 tragen. In der durch den Rahmen und die beiden Trägerplatten begrenzten Kammer befindet sich eine cholesterische Flüssigkristallsubstanz, der ein pleochroitischer Farbstoff beigemischt ist. Die Flüssigkristallschicht hat eine positive elektrische Anisotropie und wird zwischen einer planarcholesterischen und einer homöotropnematischen Orientierung geschaltet. Für weitere Einzelheiten wird auf „J. Appl. Phys." *45* (1974) 4718 verwiesen.

Der Farbstoff ist das 1,5-Diamino-4,8-dihydroxy-3,7-di-(4-methoxyphenyl)anthrachinon

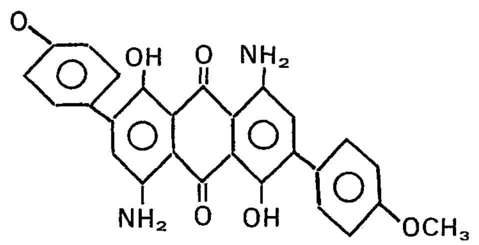

Diese Verbindung wird folgendermassen hergestellt: 0,01 mol 1,5-Dinitro-4,8-dihydroxyanthrachinon werden bei 20°C in einem Gemisch aus (60 ml konzentrierter Schwefelsäure und 5,02 g Borsäure gelöst. Nach dem Abkühlen auf −18°C tropft man innerhalb von 30 min 0,02 mol Phenylmethyläther zu und rührt bei dieser Temperatur 1 h nach. Anschliessend giesst man diese Mischung auf Eis und zerstört den Borsäureester durch einstündiges Erhitzen. Der erhaltene Niederschlag wird abgesaugt, neutral gewaschen und im Vakuum getrocknet. Man erhält ein Substanzgemisch, das einer nochmaligen Arylierung unterworfen wird. Von diesem so gewonnenen Rohprodukt wird ein Teil mit 0,009 mol Natriumborhydrid in Isopropanol reduziert. Nach Eingiessen in Wasser zentrifugiert man und trocknet im Vakuum. Schmelzpunkt: 190°C; $^1H-NMR$ ($D_6DMSO$): δ = 3,85 (s, 6H, $O-CH_3$), 7,05 (d, J = 8Hz, 4H, Ar−H), 7,2 (s, 2H, Ar−H), 7,6 (d, J = 8Hz, 4H, Ar−H), 7,95 (s, br, 6H, $-NH_2$, −OH), MS (145°C): m/e 482 (2%, $M^+$), 374 (60%, $M-C_7H_8O$).

Es wurde bereits darauf hingewiesen, dass bei der vorliegenden Verbindung die Ordnungsgrade und die Lagen der Absorptionsmaxima nur wenig auf die Wirtsubstanz reagieren. Löst man 1,5-Diamino-4,8-dihydroxy-3,7-di-(4-methoxyphenyl)-anthrachinon in einigen der üblichen Flüssigkristallmischungen, so erhält man folgende Werte:

| Flüssigkristall | $\lambda^1_{max}$ [nm] | $A^1_{\parallel}$ | $A^1_{\perp}$ | $S^1$ | $\lambda^2_{max}$ [nm] | $A^2_{\parallel}$ | $A^2_{\perp}$ | $S^2$ |
|---|---|---|---|---|---|---|---|---|
| ZLI 1132 | 596 | 0,855 | 0,094 | 0,73 | 638 | 1,071 | 0,120 | 0,73 |
| ZLI 1221 | 596 | 0,787 | 0,096 | 0,71 | 643 | 0,990 | 0,119 | 0,73 |
| ZLI 1291 | 598 | 0,729 | 0,080 | 0,73 | 644 | 0,924 | 0,102 | 0,73 |
| RO TN 401 | 600 | 0,774 | 0,082 | 0,74 | 645 | 0,982 | 0,109 | 0,73 |
| RO TN 403 | 604 | 0,762 | 0,082 | 0,73 | 645 | 0,973 | 0,108 | 0,73 |
| RO TN 404 | 602 | 0,656 | 0,062 | 0,76 | 644 | 0,837 | 0,078 | 0,76 |
| RO TN 993 | 600 | 0,707 | 0,090 | 0,70 | 640 | 0,894 | 0,114 | 0,70 |
| E 8 | 602 | 0,601 | 0,076 | 0,70 | 644 | 0,764 | 0,096 | 0,70 |

Die Substanzen ZLI 1132, ZLI 1221 und ZLI 1291 werden von der Fa. Merck angeboten, die Flüssigkristalle mit der Serienbezeichnung RO TN stammen von Hoffmann-La Roche, und das Gemisch E 8 kommt von BDH Chemicals Ltd. $\lambda^1_{max}$ und $\lambda^2_{max}$ sind die Wellenlängen, bei denen der Farbstoff jeweils ein ausgeprägtes Absorptionsmaximum hat. Die Grössen $A^i_{\parallel}$ und $A^i_{\perp}$ (i = 1, 2) stehen für die – in willkürlichen Einheiten – gemessenen optischen Dichten bei $\lambda^i_{max}$, und zwar einmal für parallel zur Vorzugsrichtung der Farbstoffmoleküle polarisiertes Licht ($A^i_{\parallel}$) und einmal für Licht, das in einer Richtung senkrecht dazu schwingt ($A^i_{\perp}$). Der Ordnungsparameter $S^i$ wurde aus der Beziehung

$$S^i = \frac{A^i_{\parallel} - A^i_{\perp}}{A^i_{\parallel} + 2A^i_{\perp}}$$

berechnet. Die Messungen wurden jeweils an 0,5-%-Lösungen bei Raumtemperatur vorgenommen. Das 1,5-Diamino-4,8-dihydroxy-3,7-di-(4-methoxyphenyl)anthrachinon lässt sich in all den verwendeten Trägersubstanzen zu mehr als 1,5% lösen.

Die Fig. 2 zeigt das Absorptionsverhalten von 1,5-Diamino-4,8-dihydroxy-3,7-di-(4-methoxyphenyl)anthrachinon in RO TN 404. Aufgetragen sind die gemessenen Werte $A_{\parallel}$ (Kurve 9) und $A_{\perp}$ (Kurve 11) gegen die Wellenlänge λ. Die Absorptionsspektren der anderen Lösungen unterscheiden sich von den dargestellten Kurven im wesentlichen nur dadurch, dass sie minimal zu kleineren oder grösseren Wellenlängen hin verschoben sind.

In welcher Weise der Ordnungsparameter S von der Art und Grösse der Farbstoffmoleküle sowie der Beschaffenheit der Flüssigkristallsubstanz beeinflusst wird, lässt sich aus dem vorhandenen Datenmaterial nicht ohne weiteres erkennen.

Immerhin hat der Farbstoff in untereinander verwandten Flüssigkristallgemischen, etwa der RO TN-Gruppe oder der ZLI-Gruppe, die Tendenz, sich umso besser zu ordnen, je höher der Klärpunkt der einzelnen Gruppenmitglieder liegt. Dies mag darauf zurückzuführen sein, dass bei Raumtemperatur die Flüssigkristallmoleküle selbst sauberer ausgerichtet sind, wenn die Mesophase bis zu höheren Temperaturen reicht.

## Patentansprüche

1. Flüssigkristall mit einem eingelagerten pleochroitischen Anthrachinonfarbstoff der allgemeinen Formel:

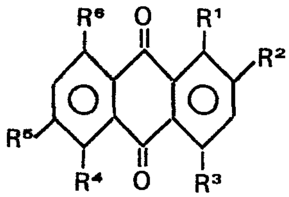

,

mit
$R^1$, $R^3$, $R^4$, $R^6$ = H, OH, $OCH_3$, $NH_2$, $NO_2$, $NHCH_3$ und $R^2$ = $R^5$ = - 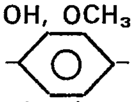 - $R^7$, wobei $R^7$ ein Alkoxyrest ist, dadurch gekennzeichnet, dass der Anthrachinonfarbstoff ein 1,5-Diamino-4,8-dihydroxy-3,7-di-(4-methoxyphenyl)anthrachinon ist.

2. Verwendung des Flüssigkristalls mit eingelagertem Anthrachinonfarbstoff nach Anspruch 1 in einer Anzeigevorrichtung, wobei er elektrisch zwischen verschiedenen Ordnungszuständen geschaltet ist.

## Revendications

1. Cristal liquide à colorant anthraquinonique pléochroïque incorporé de formule développée:

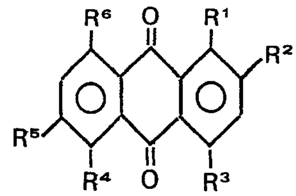

,

avec
$R^1$, $R^3$, $R^4$, $R^6$ = H, OH, $OCH_3$, $NH_2$, $NO_2$, $NHCH_3$ et $R^2$ = $R^5$ = - 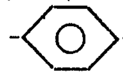 - $R^7$, $R^7$ étant un radical alcoxy, caractérisé en ce que le colorant anthraquinonique est une 1,5-diamino-4,8-dihydroxy-3,7-di-(4-méthoxyphényl)anthraquinone.

2. Utilisation du cristal liquide à colorant anthraquinonique incorporé suivant la revendication 1, dans un dispositif d'affichage à cristal liquide, le cristal liquide passant électriquement entre des états d'ordre différents.

## Claims

1. A liquid crystal having an included pleochroic anthraquinone dye of the general formula:

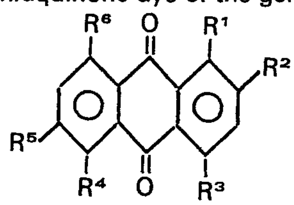

,

where
$R^1$, $R^3$, $R^4$, $R^6$ = H, OH, $OCH_3$, $NH_2$, $NO_2$, $NHCH_3$ and $R^2$ = $R^5$ = - 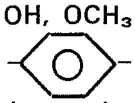 - $R^7$, where $R^7$ is an alkoxy residue, characterized in that the anthraquinone dye is a 1,5-diamino-4,8-dihydroxy-3,7-di-(4-methoxyphenyl)anthraquinone.

2. The use of the liquid crystal having an included anthraquinone dye as claimed in claim 1 in a display device, where it is electrically switched between different arrangement states.

FIG 1

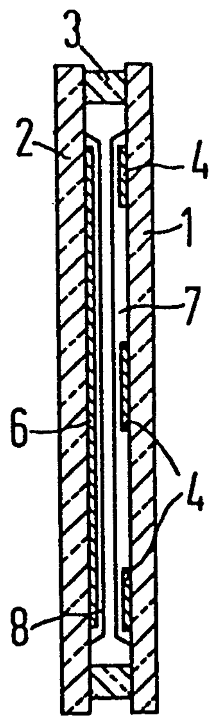


FIG 2